# EUROPEAN PATENT SPECIFICATION

(11) **EP 0 703 369 B1**
(45) Date of publication and mention of the grant of the patent: **29.11.2000**
(21) Application number: 95306263.5
(22) Date of filing: 07.09.1995
(51) Int. Cl.: F15B 13/08, F15B 13/043, F15B 13/044, F16K 31/42

(54) **Pilot-type change-over valve**
Pilot Umschaltventil
Vanne de commutation piloté

(30) Priority: 22.09.1994 JP 25468994; 21.12.1994 JP 33578694
(43) Date of publication of application: 27.03.1996
(73) Proprietor: SMC CORPORATION, Minato-ku Tokyo 105 (JP)
(72) Inventor: Sato, Hideharu, c/o SMC Corporation Tsukuba, Yawara-mura, Tsukuba-gun, Ibarkai (JP)
(74) Representative: Allam, Peter Clerk

(56) References cited:
- DE-B- 1 059 731
- FR-A- 2 260 735
- US-A- 3 110 468
- US-A- 3 176 954
- US-A- 3 540 480

## Description

This invention relates to pilot-type change-over valves, and more particularly to pilot-type change-over valves of the type in which a small solenoid valve actuates a larger main valve.

Pilot-type change-over valves comprising a main valve segment having multiple ports, communication between the individual ports being switched by a sliding valve member, and a solenoid pilot valve segment that supplies and discharges a pilot fluid to and from a pilot chamber in the main valve segment.

In this known type of pilot-type change-over valve, the small solenoid pilot valve that does not consume much power actuates the main valve segment with fast response when the capacity of the main valve segment is small. When the capacity of the main valve segment and that of the pilot chamber into which the pilot fluid to actuate the main valve segment is supplied increase, the response of the main valve segment lowers significantly because the supply of the pilot fluid made by the small solenoid pilot valve per unit time is insufficient.

This problem can be solved by increasing the supply of the pilot fluid per unit time by increasing the capacity of the solenoid pilot valve. To supply pilot-type change-over valves of various capacities to markets, however, solenoid pilot valves of as many different capacities are required. Manufacturing small quantities of solenoid pilot valves of varied types is very costly. Now that the solenoid pilot valve accounts for a relatively large proportion of the cost of the pilot-type change-over valve, lowering the cost of solenoid pilot valves is essential to the cost reduction of pilot-type change-over valves.

US-A-3110468 discloses a control valve including an electromagnetic preliminary control valve which controls a servo valve, which in turn controls the main valve piston. This document has been taken as basis for the delimitation of claim 1.

According to the present invention, a pilot-type change-over valve comprises a main valve segment having multiple ports to pass a fluid and a valve member to switch the communication between the individual ports and a pilot valve segment that switches the valve member by supplying and discharging a pilot fluid to and from a pilot chamber in the main valve segment, in which the pilot valve comprises a poppet-type amplifying pilot valve to supply and discharge the pilot fluid to the pilot chamber in the main valve segment and a solenoid pilot valve to switch the amplifying pilot valve by means of the pilot fluid, the amplifying pilot valve having a supply capacity larger than the supply capacity of the solenoid valve and corresponding to the capacity of the pilot chamber in the main valve segment, characterised in that the amplifying pilot valve has a manual operation unit that permits supplying the pilot fluid to the pilot chamber in the main valve segment by manual operation, and in that the solenoid pilot valve is mounted on top of the main valve segment and the amplifying pilot valve is attached to one axial end of the main valve segment, with the manual operation unit placed in a position accessible from above the main valve segment, the solenoid and amplifying pilot valves being connected directly to the supply port of the main valve segment through a pilot supply passage branching off from the supply port.

The invention provides pilot-type change-over valves of various capacities at low cost using common interchangeable small solenoid pilot valves of low-power-consumption type. Any shortage in solenoid pilot valve capacity is made up for by using fluid-driven poppet-type amplifying pilot valves.

When the solenoid of the solenoid pilot valve is energised, the solenoid pilot valve supplies the pilot fluid to the fluid-driven amplifying pilot valve which, in turn, supplies the pilot fluid to the pilot chamber of the main valve segment. Then, the valve member in the main valve segment moves to switch the communication between the multiple ports.

The use of the fluid-pressure-driven poppet-type amplifying pilot valve permits the use of common interchangeable small solenoid pilot valves of low-power-consumption type. Simple, inexpensive poppet-type amplifying solenoid valves thus making up for the capacity shortage of solenoid pilot valves used in large-capacity change-over valves permit offering pilot-type change-over valves of various capacities at low cost.

This, in turn, permits reducing the size and power requirement of the solenoid pilot valve and the cost of the pilot-type change-over valve as a whole.

Mounting the solenoid pilot valve on top of the main valve segment and attaching the amplifying pilot valve to one axial end of the main valve segment with the manual operation unit placed in a position accessible from above the main valve segment reduces the space requirement of the pilot-type change-over valve having two pilot valve segments and facilitates the operation of the manual operation unit. Because, in addition, the pressurised fluid is directly supplied to the solenoid and amplifying pilot valves through the pilot supply passage branching off from the supply port of the main valve segment, the solenoid and amplifying pilot valves can be replaced and repaired individually.

Mounting the solenoid pilot valve on top of the main valve segment and attaching the amplifying pilot valve to one axial end of the main valve segment with the manual operation unit placed in a position accessible from above the main valve segment permits supplying and discharging the pressurised fluid to and from the solenoid pilot valve through the amplifying pilot valve. This, in turn, simplifies the fluid piping and passage design in the main valve segment. Furthermore, assembling and disassembling work are also simplified now that the solenoid and amplifying pilot valves can be integrally attached to and detached from the main valve segment.

An example of a valve falling within the scope of the present invention will be described with respect to the accompanying drawings, in which:

Fig. 1 is a cross-sectional view showing the construction of an embodiment of this invention, with the upper and lower half parts of the main valve segment showing different switching conditions.

Fig. 2 is a cross-sectional view showing the construction of the amplifying pilot valve, with the right and left half parts showing different switching conditions.

Fig. 3 is a block diagram showing the construction of the embodiment of this invention.

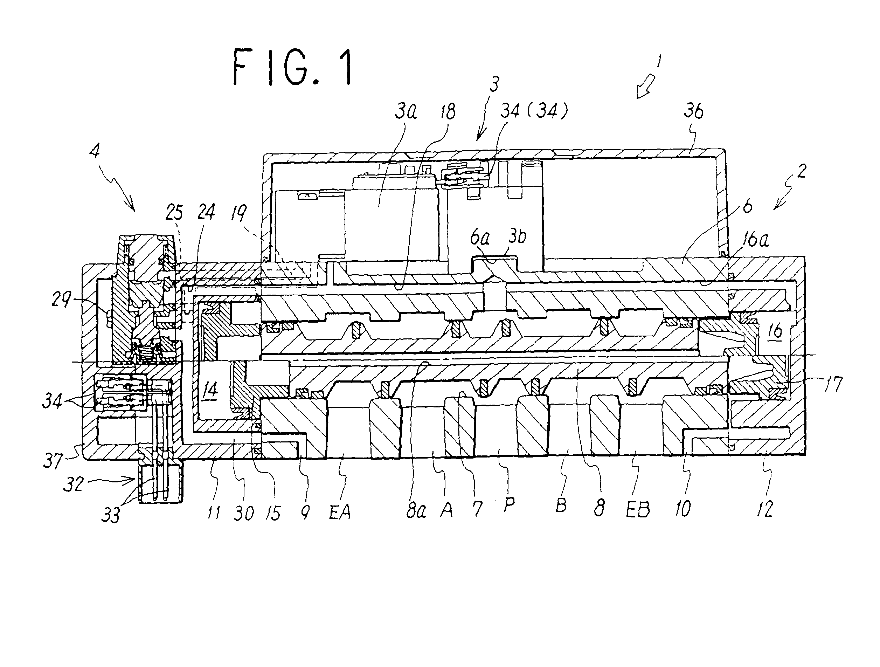

Figs. 1 to 3 show an embodiment of this invention. A pilot-type change-over valve 1 comprises a large-capacity spool-type main valve segment 2 with a high fluid throughput in unit time and a pilot valve segment that supplies and discharges a pilot fluid to and from a pilot chamber in the main valve segment 2. The pilot valve segment comprises a solenoid pilot valve 3 and a hydraulically driven amplifying pilot valve 4 that increases the output of the solenoid pilot valve 3, which are mounted on a manifold base not shown.

The valve body 6 of the main valve segment 2 has a compressed air supply port P, output ports A and B, and exhaust ports EA and EB in the surface that faces the manifold base and a valve port 7 into which said ports open in the center of the valve body 6. In the valve port 7 is slidably fitted a spool-type valve member 8 that switches the communication of the output ports A and B with the supply port P and the exhaust ports EA and EB, thus forming a change-over valve of know type. An external pilot port 9 and a respiration port 10 are also provided in the surface that faces the manifold base.

The pilot-type change-over valve 1 and the manifold base are so designed that the ports in the bottom of the valve body 6 communicate with the mating ports in the manifold base when the valve body 6 of the main valve segment 2 is mounted on the manifold base.

A first piston box 11 and a second piston box 12 are attached to both axial ends of the valve body 6. In the first piston box 11, a pilot chamber 14 is provided so that the opening thereof leads to one end surface of the valve member 8. A first piston 15 is slidably fitted in the pilot chamber 14. The second piston box 12 has a return pressure chamber 16 having a smaller cross-sectional area than the pilot chamber 14 is provided so that the opening leads to the other end surface of the valve member 8. A second piston 17 having a smaller diameter than the first piston 15 is slidably fitted in the return pressure chamber 16. The valve member 8 is disposed so as to be moved back and forth by the two pistons.

An axial through hole 8a formed in the valve member 8 establishes communication between the valve member 8 and the individual respiration chambers between the pistons 15 and 17. The return pressure chamber 16 partitioned off by the second piston 17 is in communication with the supply port P through a passage 16a.

The solenoid pilot valve 3 constitutes a small-sized, small-capacity solenoid-driven pilot valve segment of low-power-consumption type. The capacity of the solenoid pilot valve 3 corresponds to the small capacity of the main valve segment that can be driven, with fast response, by the solenoid pilot valve alone.

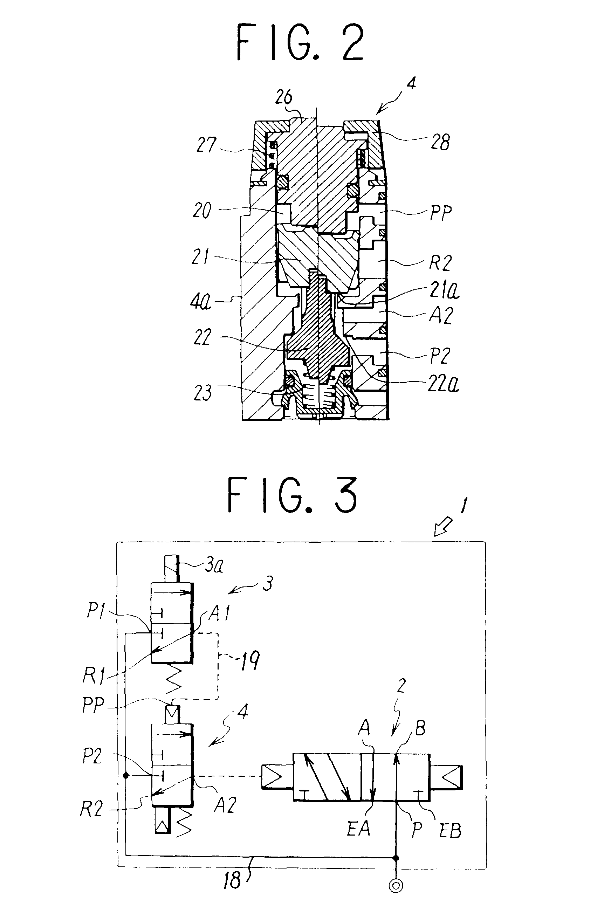

As shown in Fig. 3, the solenoid pilot valve 3 is a three-port valve of known type that has a first pilot supply port P1, a first pilot output port A1 and a first pilot exhaust port R1. Energization and release of a solenoid 3a switches the communication of the first pilot output port A1 with the first pilot supply port P1 and the first pilot exhaust port R1.

The first pilot supply port P1 communicates with the supply port P in the main valve segment through a first pilot supply passage 18 formed in the valve body 6. The first pilot output port A1 communicates with a pilot port PP (Fig. 2) in the amplifying pilot valve 4 through a first pilot output passage 19 formed in the valve body 6 and the first piston box 11. The first pilot exhaust port R1 communicates with the respiration chamber between the first piston 15 and the valve member 8 through a passage not shown and leads to outside through the through hole 8a and respiration port 10.

The solenoid pilot valve 3 also has a recess 3b adapted to mate with a positioning projection 6a formed on the top surface of the valve body 6. The solenoid pilot valve 3 is placed in position by the engagement of the positioning projection 6a with the recess 3b and fastened to the top surface of the valve body 6 by suitable means.

Fig. 2 shows details of the amplifying pilot valve 4 whose valve body 4a has a second pilot supply port P2, a second pilot output port A2, a second pilot exhaust port R2 and a pilot port PP, with valve seats 21a and 22a set in opposite directions on both sides of the second pilot supply port P2. At one end of the valve body 4a is provided a pilot chamber 20 into which the pilot port PP opens. A pilot piston 21 is hermetically and slidably fitted in that side of the pilot chamber 20 where the second pilot exhaust port R2 opens. The pilot piston 21 disposed opposite the valve seat 21a functions as a poppet valve member that opens and closes the valve seat. A poppet-type pilot valve member 22 that opens and closes the valve seat 22a when moved back and forth by the pressure of the pilot piston 21 is provided in a valve chamber that brings the second pilot supply port P2 and the second pilot output port A2 into communication with each other. The poppet-type pilot valve member 22 is urged in the closing direction by a return spring 23.

The pilot piston 21 is cut short to reduce resistance to a stream of pressurized air flowing from the valve seat 21a to the second pilot exhaust port R2, whereas a portion of the pilot valve member 22 coming in contact with the valve seat 22a is conically shaped to reduce resistance to a stream of pressurized air flowing from the second pilot supply port P2 to the second pilot output port A2.

The pilot piston 21 and pilot valve member 22 are made of material having both elasticity and sealing properties.

A manual operation member 26 that closes the top end of the pilot chamber 20 can be manually depressed from outside against the force of the return spring 27. A cap 28 mounted on the body 4a of the pilot valve segment keeps the manual operation member 26 from jutting out. The manual operation member 26, which depresses the pilot piston 21 when manually depressed, forms a manual operation unit to switch the amplifying pilot valve 4.

The amplifying pilot valve 4 is fastened to a side of the first piston box 11 or an axial end of the main valve segment with a bolt 29, with the manual operation member 26 placed in a position accessible from above for ease of operation.

When no pilot air is supplied to the pilot chamber 20, the pilot valve member 22 in the amplifying pilot valve 4 closes the valve seat 22a by the force of the return spring 23 working thereon while opening the valve seat 21a by pressing the pilot piston 21. When the pilot air from the solenoid pilot valve 3 is supplied into the pilot chamber 20 through the pilot port PP, the pilot piston 21 and pilot valve member 22 are pressed against the force of the return spring 23, whereupon the pilot piston 21 closes the valve seat 21a and the pilot valve member 22 opens the valve seat 22a. Thus, the amplifying pilot valve 4 functions as a pneumatically operated poppet-type three-port valve of known type that switches the communication of the second pilot output port A2 with the second pilot supply port P2 and the second pilot exhaust port R2.

As will be evident from Figs. 1 and 3, the second pilot supply port P2 communicates with the supply port P in the main valve segment 2 through a second pilot supply passage 24 communicating with the first pilot supply passage 18, the second pilot output port A2 communicates with the pilot chamber 14 in the main valve segment 2 through a second pilot output passage 25, and the second pilot exhaust port R2 communicates with a respiration chamber between the first piston 15 and valve member 8 through a passage not shown.

The amplifying pilot valve 4 has a capacity appropriate for the pilot chamber 14 of the large-capacity main valve segment 2 so that a large quantity of pilot air can be supplied to the pilot chamber 14 in a short time. The amplifying pilot 4 operated by the pilot air supplied from and discharged to the solenoid pilot valve 3 and amplifying the supply of pilot air to the pilot chamber 14 is cheaper than the solenoid pilot valve 3. The use of amplifying pilot valves whose capacity corresponds to the capacity of the individual pilot chambers 14 reduces the manufacturing cost of pilot-type change-over valves, as compared with the use of solenoid pilot valves 3 whose capacity is proportional to the capacity of the main valve segment 2.

The external pilot port 9 in the valve body 6 communicates with the second pilot supply passage 24 through an external pilot passage 30. Therefore, this pilot-type change-over valve can serve as either an internal pilot valve or an external pilot valve, as required.

When serving as an internal pilot valve that introduces a pilot fluid from the supply port P of the main valve segment 2, the external pilot port 9 is closed by a ball or other suitable means not shown. When serving as an external pilot valve introducing a pilot fluid from outside through the external pilot port 9, the supply port P in the main valve segment 2 is cut off from the first pilot supply passage 18 and the passage 16a by suitable means not shown.

A power supply unit 32 to supply electricity to the solenoid 3a of the solenoid pilot valve 3 is provided below the amplifying pilot valve 4.

The power supply unit 32 has a pair of power-receiving terminals 33 projecting downward from the bottom of the valve body 6. A conductor 34 electrically connected to the power-receiving terminals 33 is electrically connected to the terminal of the solenoid 3a of the solenoid pilot valve 3 through a passage (not shown) provided in the first piston box 11 and valve body 6. The power-receiving terminals 33 are designed to establish an electrical connection with the power-supplying terminals on the manifold base when the main valve segment 2 is mounted thereon. When the pilot-type change-over valve 1 is mounted on the manifold base, accordingly, power is supplied from the power-supplying terminals on the manifold base to the solenoid 3a of the solenoid pilot valve 3.

Reference numerals 36 and 37 designate covers placed over the solenoid pilot valve 3 and the power supply unit 32, respectively, which are made of transparent or translucent material.

When the solenoid 3a of the solenoid pilot valve 3 in the first embodiment described above is not energized, no pressurized air is supplied to the pilot chamber 20 in the amplifying pilot valve 41. The pilot air in the pilot chamber 14 is discharged outside through the second pilot output port A2 and the second pilot exhaust port R2 in the amplifying pilot valve 4. With the valve member 8 of the main valve segment 2 moved to the left in Fig. 1 by the action of the air pressure in the return pressure chamber 16, therefore, the supply port P is in communication with the output port B, and the output port A is in communication with the exhaust port EA (see the upper half of the valve member in Fig. 1).

When the solenoid 3a of the solenoid pilot valve 3 is energized by the power supplied from the power supply unit 32, the first pilot output port A1 communicates with the first pilot supply port P1, whereupon the pilot air is supplied to the pilot chamber 20 in the amplifying pilot valve 4, as shown in Fig. 3. Then, the second pilot output port A2 communicates with the second pilot supply port P2 to supply the pilot air to the pilot chamber 14 in the main valve segment 2. Because of the difference between the pressure-receiving areas of the pilot chamber 14 and the return pressure chamber 16, the first piston 15 moves to the right in Fig. 1, thereby pressing the valve member 8 and bringing the supply port P and output port A, and the output B and exhaust port EB, into communication with each other (see the lower half of the valve member 8 in Fig. 1).

When the solenoid 3a is de-energized, the first pilot outlet port A1 of the solenoid pilot valve 3 comes into communication with the first exhaust port R1 to discharge the air in the pilot chamber 20 of the amplifying pilot valve 4 to the outside. Then, the return spring 23 brings the pilot valve member 22 back to its original position, thus bringing the second pilot output port A2 into communication with the second pilot exhaust port R2. This expels the pilot air in the pilot chamber 14 to the outside, whereby the air pressure in the return pressure chamber 16 that works on the second piston 17 brings the valve member 8 back to its original position.

The valve member 8 of the main valve segment 2 that switches the communication between the individual ports is actuated by a large quantity of pilot air corresponding to the capacity of the pilot chamber 14 that is supplied thereto from the poppet-type amplifying pilot valve 4. Because the amplifying pilot valve 4 is of the poppet type permitting a high rate of flow, even the small solenoid pilot valve 3 consuming less power can move the main valve segment 2 with fast response. Thus, pilot-type change-over valves providing fast response are available at low cost.

The manual operation member 26 provided in the amplifying pilot valve 4 so as to be accessible from above the main valve segment 2 permits manual operation of the main valve segment 2 when operation by the solenoid pilot valve 2 becomes impossible due to power failure, machine breakdown or other troubles. The manual operation member 26 is located in an easy-to-operate position.

Although the main valve segment 2 in the embodiment described is of the five-port type, main valve segments of this invention are by no means limited thereto. Four- or three-port valves can serve the purpose of this invention, as well. The valve member 8 may also be returned to its original position by the force of a return spring provided in the return pressure chamber 16 or by the combined force of pneumatic pressure and the return spring.

The pilot-type change-over valves of this invention described above permit using common interchangeable small solenoid pilot valves with small power requirements. Fluid-pressure-driven poppet-type amplifying pilot valves make up for any capacity shortage due to the use of such small solenoid pilot valves in large-capacity change-over valves. Thus, this invention permits supplying pilot-type change-over valves of various capacities at lost cost. Despite the use of small solenoid pilot valves, the large-capacity main valve segment can be actuated with fast response.

Mounting the solenoid pilot valve on top of the main valve segment and the amplifying pilot valve to one axial end thereof, with the manual operation unit placed in a position accessible from above the main valve segment, permits installing a pilot-type change-over valve having two pilot valve segments in a small space while facilitating the manual operation of the amplifying pilot valve. Because, in addition, the pressurised fluid is directly supplied to the solenoid and amplifying pilot valve through the pilot supply passage branching off from the supply port of the main valve segment, the solenoid and amplifying pilot valves can be replaced and repaired individually.

Assembling and disassembling work are also simplified now that the solenoid and amplifying pilot valves can be integrally attached to and detached from the main valve segment.

## Claims

1. A pilot-type change-over valve (1) that comprises a main valve segment (2) having multiple ports (A, P, B, EA, EB) to pass a fluid and a valve member (8) to switch the communication between the individual ports (A, P, B, EA, EB) and a pilot valve segment that switches the valve member (8) by supplying and discharging a pilot fluid to and from a pilot chamber (14) in the main valve segment (2), in which the pilot valve comprises a poppet-type amplifying pilot valve (4) to supply and discharge the pilot fluid to the pilot chamber (14) in the main valve segment (2) and a solenoid pilot valve (3) to switch the amplifying pilot valve (4) by means of the pilot fluid, the amplifying pilot valve (4) having a supply capacity larger than the supply capacity of the solenoid valve (2) and corresponding to the capacity of the pilot chamber (14) in the main valve segment (2), characterised in that the amplifying pilot valve (4) has a manual operation unit (26) that permits supplying the pilot fluid to the pilot chamber (14) in the main valve segment (2) by manual operation, and in that the solenoid pilot valve (3) is mounted on top of the main valve segment (2) and the amplifying pilot valve (4) is attached to one axial end of the main valve segment (2), with the manual operation unit (26) placed in a position accessible from above the main valve segment (2), the solenoid and amplifying pilot valves (3,4) being connected directly to the supply port (P) of the main valve segment (2) through a pilot supply passage branching off from the supply port (P).

## Patentansprüche

1. Pilot-Umschaltventil (1), das einen Hauptventilabschnitt (2) mit mehrfachen Öffnungen (A, P, B, EA, EB) zum Durchströmen einer Flüssigkeit und einem Ventilbauteil (8) zum Schalten der Verbindung zwischen den einzelnen Öffnungen (A, P, B, EA, EB) und einem Pilot-Ventilabschnitt umfaßt, der das Ventilbauteil (8) durch Zuführen einer Pilot-Flüssigkeit zu einer Pilot-Kammer (14) im Hauptventilabschnitt (2) und durch Ausströmenlassen von dort schaltet, wobei das Pilot-Ventil ein Teller-Verstärker-Pilot-Ventil (4) zum Zuführen der Pilot-Flüssigkeit zu der Pilot-Kammer (14) im Hauptventilabschnitt (2) und Ausströmenlassen von dort und ein Magnet-Pilot-Ventil (3) zum Schalten des Verstärker-Pilot-Ventils (4) mittels der Pilot-Flüssigkeit umfaßt, wobei das Verstärker-Pilot-Ventil (4) eine größere Zufuhrkapazität als das Magnetventil (2) und eine der der Pilot-Kammer (14) im Hauptventilabschnitt (2) entsprechenden Kapazität hat, dadurch gekennzeichnet, daß das Verstärker-Pilot-Ventil (4) eine Handbedienungseinheit (26) hat, die das Zuführen der Pilot-Flüssigkeit zu der Pilot-Kammer (14) im Hauptventilabschnitt (2) durch Handbetrieb zuläßt, und daß das Magnet-Pilot-Ventil (3) auf der Oberseite des Hauptventilabschnitts (2) montiert ist und das Verstärker-Pilot-Ventil (4) an einem Axialende des Hauptventilabschnitts (2) befestigt ist, wobei die Handbedienungseinheit (26) in einer von oberhalb des Hauptventilabschnitts (2) zugänglichen Position untergebracht ist, wobei die Magnet- und Verstärker-Pilot-Ventile (3,4) durch einen Pilot-Zufuhrdurchgang, der von der Zufuhröffnung (P) abzweigt, direkt mit der Zufuhröffnung (P) des Hauptventilabschnitts (2) verbunden ist.

## Revendications

1. Vanne de commutation du type pilote (1) qui comporte un tronçon de vanne principale (2) ayant de multiples orifices (A, P, B, EA, EB) destinés à laisser passer un fluide et un élément de vanne (8) destiné à commuter la communication entre les orifices individuels (A, P, B, EA, EB) et un segment de vanne pilote qui commute l'élément de vanne (8) en alimentant et en évacuant un fluide pilote vers une chambre pilote (14) située dans le tronçon de vanne principale (2) et à partir de cette chambre, dans laquelle la vanne pilote comporte une vanne pilote d'amplification du type soupape à champignon (4) pour alimenter et évacuer le fluide pilote vers la chambre pilote (14) située dans le tronçon de vanne principale (2) et une électrovanne pilote (3) pour commuter la vanne pilote d'amplification (4) par l'intermédiaire du fluide pilote, la vanne pilote d'amplification (4) ayant une capacité d'alimentation plus grande que la capacité d'alimentation de l'électrovanne (3) et correspondant à la capacité de la chambre pilote (14) du tronçon de vanne principale (2), caractérisé en ce que la vanne pilote d'amplification (4) a une unité d'actionnement manuel (26) qui permet d'alimenter le fluide pilote vers la chambre pilote (14) du tronçon de vanne principale (2) par un actionnement manuel et en ce que l'électrovanne pilote (3) est montée sur la partie supérieure du tronçon de vanne principale (2) et la vanne pilote d'amplification (4) est reliée à une première extrémité axiale du tronçon de vanne principale (2), l'unité d'actionnement manuel (26) étant mise dans une position accessible à partir du dessus du tronçon de vanne principale (2), l'électrovanne pilote et la vanne pilote d'amplification (3, 4) étant reliées directement à l'orifice d'alimentation (P) du tronçon de vanne principale (2) par l'intermédiaire d'un passage d'alimentation pilote raccordé à l'orifice d'alimentation (P).
